# EUROPÄISCHE PATENTSCHRIFT

(11) **EP 3 673 173 B1**
(45) Veröffentlichungstag und Bekanntmachung des Hinweises auf die Patenterteilung: **23.03.2022**
(21) Anmeldenummer: 18758585.6
(22) Anmeldetag: 20.08.2018
(51) Int. Cl.: F03D 80/30

(54) **WINDENERGIEANLAGEN-ROTORBLATT MIT EINEM BLITZSCHUTZSYSTEM**
WIND-TURBINE ROTOR BLADE WITH A LIGHTNING PROTECTION SYSTEM
PALE DE ROTOR D'ÉOLIENNE AVEC UN SYSTÈME PARATONNERRE

(30) Priorität: 25.08.2017 DE 102017119484
(43) Veröffentlichungstag der Anmeldung: 01.07.2020
(73) Patentinhaber: Wobben Properties GmbH, 26607 Aurich (DE)
(72) Erfinder: VINKE, Daniel, 26607 Aurich (DE)
(74) Vertreter: Eisenführ Speiser
(86) Internationale Anmeldenummer: PCT/EP2018/072415
(87) Internationale Veröffentlichungsnummer: WO 2019/038223

(56) Entgegenhaltungen:
- EP-A1- 1 022 834
- EP-A1- 1 664 528
- CN-A- 102 661 240
- DE-A1-102010 062 819

## Beschreibung

Die vorliegende Erfindung betrifft ein Windenergieanlagen-Rotorblatt sowie ein Blitzschutzsystem für ein Windenergieanlagen-Rotorblatt.

Jede Windenergieanlage muss ein Blitzschutzsystem aufweisen, um eine entsprechende Betriebsgenehmigung zu erhalten. Das Blitzschutzsystem weist typischerweise mehrere Blitzrezeptoren auf, welche elektrisch mit einem Blitzschutzleiter oder Blitzschutzkabel verbunden sind. Der Blitzschutzleiter führt durch das Rotorblatt an die Rotorblattwurzel und kann dann mit dem weiteren Blitzschutzsystem der Windenergieanlage kontaktiert werden. Eine sichere elektrische Kontaktierung des Blitzschutzsystems über verschiedene Komponenten hinweg ist wesentlich für den Betrieb der Windenergieanlage.

Das Blitzschutzsystem eines Windenergieanlagen-Rotorblattes weist typischerweise mehrere Durchkontaktierungen auf, mittels welcher verschiedene Komponenten des Blitzschutzsystems miteinander kontaktiert werden können.

In der prioritätsbegründenden deutschen Patentanmeldung hat das Deutsche Patent- und Markenamt die folgenden Dokumente recherchiert: DE 20 2010 013 535 U1, US 2010/0090472 A1 und US 2013/0195661 A1.

DE102010062819A1 und CN102661240A sind andere relevante Dokumente des Standes der Technik.

Es ist Aufgabe der vorliegenden Erfindung, ein Windenergieanlagen-Rotorblatt vorzusehen, welches über eine verbesserte Durchkontaktierung bzw. welches über verbesserte Durchkontaktierungsmöglichkeiten verfügt.

Diese Aufgabe wird durch ein Windenergieanlagen-Rotorblatt nach Anspruch 1 gelöst.

Somit wird ein Windenergieanlagen-Rotorblatt mit einem Blitzschutzsystem vorgesehen.

Das Blitzschutzsystem weist mindestens einen Blitzrezeptor und ein Blitzschutzkabel sowie mindestens eine Verbindungseinheit zum Verbinden von zwei Abschnitten eines Blitzschutzleiters auf. Die Verbindungseinheit stellt eine Durchkontaktierung dar und weist eine Schraube mit einem großen Kragen auf. Ferner weist die Verbindungseinheit eine Mutter mit einem großen Kragen sowie einem Innengewinde auf.

Die Schraube sowie die Mutter weisen jeweils ein leitfähiges Material, beispielsweise Metall wie Aluminium, Kupfer oder Messing oder Legierungen auf, um zwei Abschnitte eines Blitzschutzleiters miteinander zu verbinden. Dadurch, dass sowohl die Schraube als auch die Mutter jeweils über einen großen Kragen verfügen, weisen beide eine große Auflagefläche, die beiden zu verbindenden Abschnitte des Blitzschutzsystems auf, wodurch eine gute elektrische Kontaktierung ermöglicht wird.

Ferner ermöglicht das Innengewinde der Mutter sowie das Außengewinde der Schraube, dass die Schraube und die Mutter fest miteinander verbunden werden können und somit die zu verbindenden Elemente des Blitzschutzsystems ebenfalls fest miteinander verbunden werden können.

Aufgrund der einfachen Ausgestaltung der Mutter sowie der Schraube wird eine effektive und kostengünstige Möglichkeit der Verbindung von verschiedenen Elementen des Blitzschutzsystems ermöglicht. Diese Konstruktion ist einfach ausgestaltet und günstig herzustellen und kann dennoch hohe Blitzströme ohne Funkenbildung ableiten. Des Weiteren wird der Verschleiß reduziert.

Gemäß der vorliegenden Erfindung weist die Schraube eine Hohlbohrung auf. Mittels einer Schraube und einer selbstsichernden Mutter kann z.B. ein Kabelschuh an der Kontaktierungsschraube befestigt werden. Die Schraube mit der selbstsichernden Mutter stellt eine sichere Verbindung zwischen Kabelschuh und Schraube der Durchkontaktierung her und sorgt zusätzlich dafür, dass sich der Kontaktverbinder nicht lösen kann. Durch das Gewinde kann ferner der benötigte Anpressdruck zwischen den verschiedenen Komponenten des Blitzschutzsystems erreicht werden.

Gemäß einem Aspekt der vorliegenden Erfindung stellt die Mutter eine selbstsichernde Mutter dar.

Vorteile und Ausführungsbeispiele der Erfindung werden nachstehend unter Bezugnahme auf die Zeichnungen erläutert.
- Fig. 1: zeigt eine schematische Darstellung einer Windenergieanlage gemäß der Erfindung,
- Fig. 2A: zeigt eine schematische Darstellung eines Windenergieanlagen-Rotor-blattes,
- Fig. 2B: zeigt eine schematische Schnittansicht des Windenergieanlagen-Ro-torblattes und
- Fig. 3A - 3F: zeigen jeweils verschiedene Ansichten der Verbindungseinheit gemäß der Erfindung.

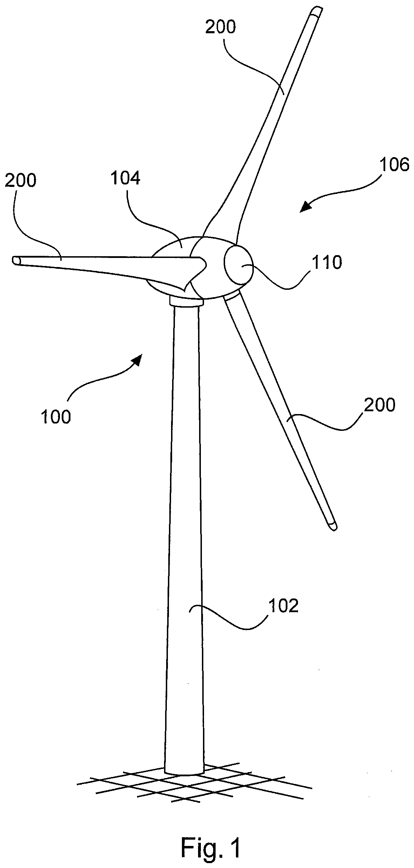

Fig. 1 zeigt eine schematische Darstellung einer Windenergieanlage gemäß der Erfindung. Fig. 1 zeigt eine Windenergieanlage 100 mit einem Turm 102 und einer Gondel 104. An der Gondel 104 ist ein Rotor 106 mit drei Rotorblättern 200 und einem Spinner 110 angeordnet. Der Rotor 106 wird im Betrieb durch den Wind in eine Drehbewegung versetzt und treibt dadurch einen Generator in der Gondel 104 an.

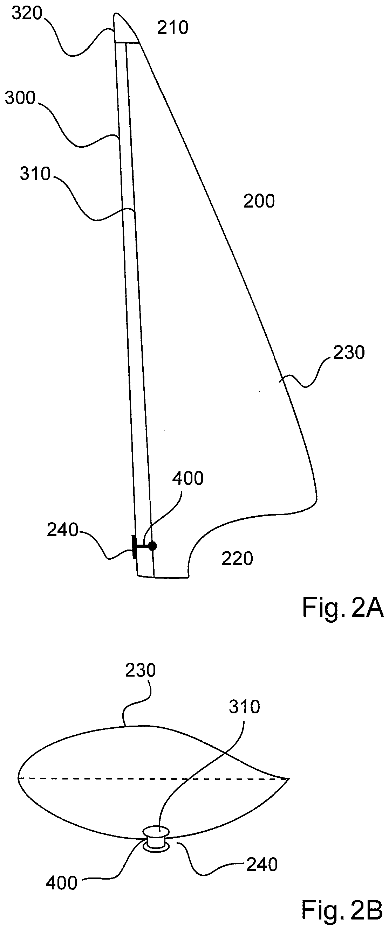

Fig. 2A zeigt eine schematische Darstellung eines Windenergieanlagen-Rotorblattes und Fig. 2B zeigt eine schematische Schnittansicht des Windenergieanlagen-Rotorblattes Das Rotorblatt 200 weist eine Rotorblattspitze 210, eine Rotorblattwurzel 220 sowie eine Rotorblatthülle 230 auf, welche beispielsweise durch zwei miteinander verbundene Halbschalen zusammengesetzt ist. Das Rotorblatt 200 weist ein Blitzschutzsystem 300 auf, welches mindestens einen Rezeptor 320, eine Blitzschutzleitung 310 und einen Ableitring 240 außen im Bereich der Rotorblattwurzel aufweist. Zwischen dem Blitzschutzleiter 310 und dem Ableitring 240 ist eine Verbindungseinheit 400 vorgesehen. Die Verbindungseinheit 400 verbindet somit einen ersten Abschnitt des Blitzschutzsystems wie beispielsweise der Blitzschutzleiter 310 elektrisch und mechanisch mit einem zweiten Teil des Blitzschutzsystems 240.

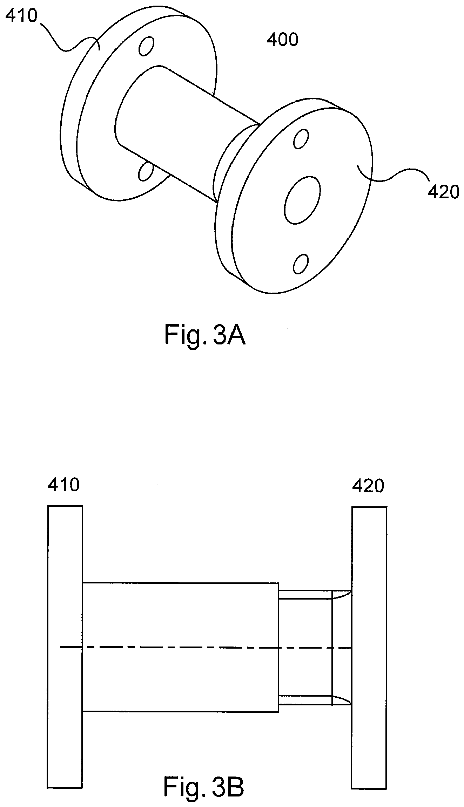

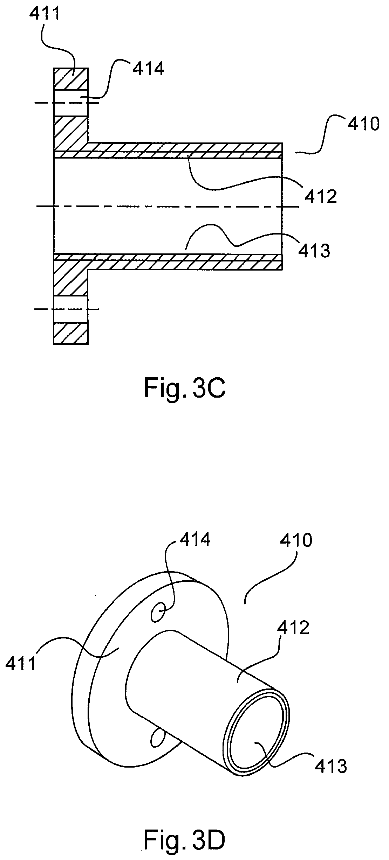

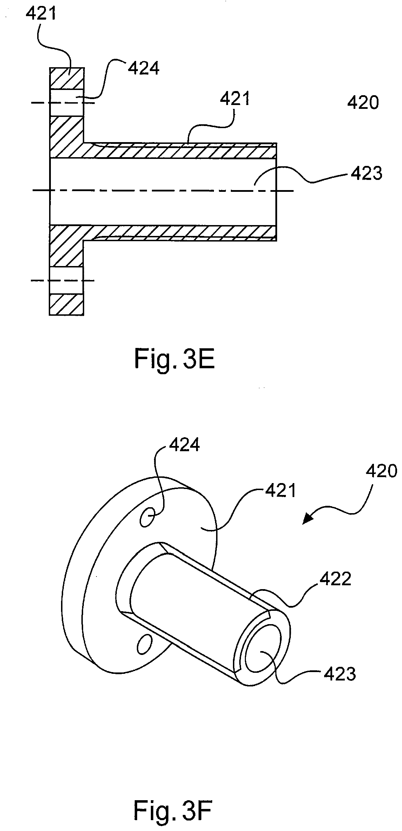

Fig. 3A - 3F zeigen jeweils verschiedene Ansichten der Verbindungseinheit gemäß der Erfindung. Die Verbindungseinheit 400 weist eine Schraube 420 sowie eine Mutter 410 auf, welche auf die Schraube 420 verschraubt werden kann. Mittels der Verbindungseinheit 400 können verschiedene Komponenten des Blitzschutzsystems elektrisch und mechanisch miteinander verbunden werden. Mittels der erfindungsgemäßen Verbindungseinheit ist es auch möglich, verschiedene Abschnitte und Elemente des Blitzschutzsystems über nichtleitende Abschnitte des Rotorblattes miteinander elektrisch zu kontaktieren.

Die Mutter 410 weist einen Kragen 411 mit Löchern 414 sowie einen länglichen Abschnitt 412 auf, welcher eine Bohrung und ein Innengewinde 413 aufweist. Die Schraube 420 weist einen Kragen 421 mit mindestens zwei Löchern 424 sowie einen länglichen Abschnitt 422 und optional eine Bohrung 423 (eine Hohlbohrung) auf. Ferner ist ein Außengewinde im Bereich des länglichen Teils 422 vorgesehen. Die Mutter 410 kann somit auf die Schraube 420 aufgeschraubt werden und kann somit verschiedene Elemente des Blitzschutzsystems sicher miteinander verbinden.

Der Außendurchmesser der Kragen 411, 421 kann zwischen 20 - 60 mm, vorzugsweise ca. 40 mm betragen. Der Außendurchmesser des Abschnitts 412 kann zwischen 15 und 20 mm, vorzugsweise ca. 18 mm betragen. Der Abschnitt 422 kann ein M14-M18 Außengewinde, vorzugsweise ein M16 Gewinde aufweisen. Der Abschnitt 411 kann ein entsprechendes Innengewinde aufweisen.

Das Verhältnis zwischen Außendurchmesser der Kragen 411, 421 und dem Außendurchmesser des Abschnitts 412 beträgt vorzugsweise mindestens 2 und insbesondere größer 3.

Somit wird ein Windenergieanlagen-Rotorblatt vorgesehen, welches über einen verbesserten Blitzschutz verfügt. Durch die Kontaktierungseinheit kann ein Blitzstrom sicher und effektiv zwischen verschiedenen Abschnitten des Blitzschutzsystems abgeleitet werden, ohne dass es dabei zu einer Funkenbildung am Kabel kommt. Dies kann insbesondere aufgrund der großen Querschnitte sowie der Auflageflächen der Kragen der Mutter und der Schraube ermöglicht werden. Die Verbindungseinheit 400 weist somit eine Schraube und eine selbstsichernde Mutter auf.

Mit der erfindungsgemäßen Verbindungseinheit kann eine Verbindung zwischen verschiedenen Elementen des Blitzschutzsystems durch einen nichtleitenden Werkstoff ermöglicht werden.

## Patentansprüche

1. Windenergieanlagen-Rotorblatt (200), mit
einem Blitzschutzsystem (300), welches mindestens einen Rezeptor (320), einen Blitzschutzleiter (310) sowie einen Ableitring (240) aufweist, wobei ein Abschnitt des Blitzschutzleiters (310) mit dem Ableitring (240) durch eine Verbindungseinheit (400) elektrisch kontaktiert ist;
wobei die Verbindungseinheit (400) eine Schraube (420) mit einem ersten Ende mit einem Kragen (421) sowie einem zweiten Ende mit einem länglichen Abschnitt (422) und einem Außengewinde im Bereich des länglichen Abschnitts (422) sowie eine Mutter (410) mit einem ersten Ende mit einem Kragen (411) und einem zweiten Ende mit einem länglichem Abschnitt (412) und einem Innengewinde (413) an dem länglichen Abschnitt (412) aufweist, wobei die Mutter (410) und die Schraube (420) miteinander mittels des Innengewindes (413) am länglichen Abschnitt (412) der Mutter (410) und des Außengewindes im Bereich des länglichen Abschnitts (422) der Schraube (420) verschraubbar sind,
wobei der Kragen (421) der Schraube (420) und der Kragen (411) der Mutter (410) sich an gegenüberliegenden Seiten der Verbindungseinheit (400) befinden, wenn die Schraube (420) mit dem Außengewinde in das Innengewinde (413) der Mutter (410) verschraubt ist,
**dadurch gekennzeichnet, dass** die Schraube (420) eine Durchgangsbohrung (423) aufweist, und das Verhältnis zwischen einem Außendurchmesser der Kragen (411, 421) und einem Außendurchmesser des länglichen Abschnitts (412) der Mutter (410) größer 3 ist.

2. Windenergieanlagen-Rotorblatt nach Anspruch 1,
wobei der Kragen (411) der Mutter (410) Löcher (414) aufweist,
wobei der Kragen (421) der Schraube (420) mindestens zwei Löcher (424) aufweist.

3. Windenergieanlagen-Rotorblatt nach Anspruch 2,
wobei das erste Ende der Schraube (420) flach ist,
wobei das erste Ende der Mutter (410) flach ist.

4. Windenergieanlagen-Rotorblatt nach Anspruch 3, wobei
der Kragen (421) der Schraube (420) und der Kragen (411) der Mutter (410) einen kreisförmigen Querschnitt aufweist.

## Claims

1. A wind turbine rotor blade (200) comprising
a lightning protection system (300) which has at least one receptor (320), a lightning protection conductor (310) and a dissipation ring (240), wherein a portion of the lightning protection conductor (310) is in electrical contact with the dissipation ring (240) by a connecting unit (400),
wherein the connecting unit (400) has a screw (420) with a first end with a collar (421) as well as a second end with an elongate portion (422) and a male thread at the region of the elongate portion (422) as well as a nut (410) with a first end with a collar (411) and a second end with an elongated portion (412) and a female thread (413) at the elongated portion (412), wherein the nut (410) and the screw (420) can be screwed together by the female thread (413) of the elongated portion (412) of the nut (410) and by the male thread of the elongated portion (422) of the screw (420),
wherein the collar (421) of the screw (420) and the collar (411) of the nut (410) are disposed at mutually opposite sides of the connecting unit (400) when the screw (420) with the male thread is screwed into the female thread (413) of the nut (410),
**characterized in that** the screw (420) has a through bore (423) and that the relationship between an outside diameter of the collars (411, 422) and an outside diameter of a portion (412) of the nut (410) is greater than 3.

2. Wind turbine rotor blade according to claim 1,
wherein the collar (411) of the nut (410) comprises holes (414),
wherein the collar (421) of the screw (420) comprises at least two holes (424).

3. Wind turbine rotor blade according to claim 2,
wherein the first end of the screw (420) is flat,
wherein the first end of the nut is flat.

4. Wind turbine rotor blade according to claim 3,
wherein the collar (421) of the screw (420) and the collar (411) of the nut comprises a circular cross section.

## Revendications

1. Pale de rotor d'éolienne (200), avec
un système de protection contre la foudre (300) qui présente au moins un récepteur (320), un conducteur de protection contre la foudre (310) ainsi qu'un anneau de transport (240), dans laquelle une section du conducteur de protection contre la foudre (310) est mise en contact électriquement avec l'anneau de transport (240) par une unité de liaison (400) ;
dans laquelle l'unité de liaison (400) présente une vis (420) avec une première extrémité avec un collet (421) ainsi qu'une seconde extrémité avec une section (422) oblongue et un filet extérieur dans la zone de la section (422) oblongue ainsi qu'un écrou (410) avec une première extrémité avec un collet (411) et une seconde extrémité avec une section (412) oblongue et un filet intérieur (413) au niveau de la section (412) oblongue, dans laquelle l'écrou (410) et la vis (420) peuvent être vissés entre eux au moyen du filet intérieur (413) au niveau de la section (412) oblongue de l'écrou (410) et du filet extérieur dans la zone de la section (422) oblongue de la vis (420),
dans laquelle le collet (421) de la vis (420) et le collet (411) de l'écrou (410) se trouvent au niveau de côtés opposés de l'unité de liaison (400) lorsque la vis (420) est vissée avec le filet extérieur dans le filet intérieur (413) de l'écrou (410),
**caractérisée en ce que** la vis (420) présente un perçage débouchant (423), et le rapport entre un diamètre extérieur des collets (411, 421) et un diamètre extérieur de la section (412) oblongue de l'écrou (410) est supérieur à 3.

2. Pale de rotor d'éolienne selon la revendication 1,
dans laquelle le collet (411) de l'écrou (410) présente des trous (414),
dans laquelle le collet (421) de la vis (420) présente au moins deux trous (424).

3. Pale de rotor d'éolienne selon la revendication 2,
dans laquelle la première extrémité de la vis (420) est plate,
dans laquelle la première extrémité de l'écrou (410) est plate.

4. Pale de rotor d'éolienne selon la revendication 3, dans laquelle
le collet (421) de la vis (420) et le collet (411) de l'écrou (410) présentent une section transversale circulaire.
